# FASCICULE DE BREVET EUROPEEN

(11) **EP 0 489 145 B1**
(45) Date de publication et mention de la délivrance du brevet: **30.11.1994**
(21) Numéro de dépôt: 91912710.0
(22) Date de dépôt: 20.06.1991
(51) Int. Cl.: B64G 1/66, B64D 47/08

(54) **DISPOSITIF ARTICULE POUR VEHICULE SPATIAL, NOTAMMENT POUR L'OBTURATION TEMPORAIRE DE L'ORIFICE D'ENTREE D'UN INSTRUMENT OPTIQUE SPATIAL**
DREHVORRICHTUNG FÜR RAUMFAHRZEUG, INSBESONDERE ZUR ZEITWEILIGEN ABDECKUNG EINER EINGANGSÖFFNUNG EINES OPTISCHEN INSTRUMENTES FÜR DEN EINSATZ IM ALL
ARTICULATED DEVICE FOR SPACE VEHICLES, ESPECIALLY FOR TEMPORARILY SEALING THE APERTURE OF SPACE OPTICAL INSTRUMENTS

(30) Priorité: 21.06.1990 FR 9007784; 27.11.1990 FR 9014814
(43) Date de publication de la demande: 10.06.1992
(73) Titulaire: AEROSPATIALE Société Nationale Industrielle, 75781 Paris Cédex 16 (FR)
(72) Inventeur: GEYER, Freddy, F-83440 Tanneron (FR); GIRAUD, Dominique, F-06110 Le Cannet (FR)
(74) Mandataire: Rinuy, Santarelli
(86) Numéro de dépôt international: FR9100494
(87) Numéro de publication internationale: WO9119645

(56) Documents cités:
- FR-A- 2 564 606
- GB-A- 1 111 414
- US-A- 4 286 856

## Description

L'invention concerne l'articulation sur un véhicule spatial d'un appendice destiné à se mouvoir à plusieurs reprises. Elle vise notamment l'obturation et le dégagement d'un orifice d'entrée, par exemple celui d'un système optique de préférence du type spatial (télescope d'observation terrestre ou spatiale par exemple).

Ainsi qu'on le sait, il est certaines phases de la vie d'un système optique spatial pendant lesquelles l'entrée de celui-ci doit être obturée. C'est non seulement le cas lors du lancement du véhicule spatial auquel ce système optique spatial est intégré (jusqu'à la mise de ce véhicule spatial en configuration de service), mais aussi ultérieurement au cours de la vie normale en service de ce système optique, notamment lorsque du fait de l'attitude du véhicule spatial le système optique vient à être soumis à des agressions extérieures (risques d'éblouissement par le soleil, risques de collisions avec des particules étrangères ...)

L'obturation et le dégagement de l'entrée d'un tel système optique spatial suppose au moins la manoeuvre d'un volet ou panneau obturateur entre une configuration ouverte dans laquelle l'entrée du système est dégagée et une configuration d'obturation dans laquelle aucun faisceau, de lumière ou de particules, ne peut pénétrer dans le système optique.

En fait, l'orifice d'entrée du système optique est classiquement entouré d'une paroi, en pratique appelée baffle d'entrée ou pare-soleil, destinée notamment à minimiser la pénétration dans le système optique de lumières parasites provenant de directions angulairement décalées par rapport à la direction nominale d'observation. C'est souvent à ce baffle d'entrée, lorsqu'il existe, que le volet obturateur est destiné à être articulé.

Il faut préciser ici que le volet obturateur considéré ici a une fonction (protection temporaire) tout à fait différente de celle de l'obturateur d'un appareil photo qui doit être manoeuvré à grande vitesse en sorte de ne rester ouvert que pendant un temps de pose très court.

En pratique, le baffle d'entrée est lui-même formé de volets articulés entre une configuration de gerbage compatible avec les contraintes d'implantation et d'encombrement sous la coiffe de lancement, et une configuration déployée dans laquelle la minimisation des lumières parasites est assurée. Il est toutefois à noter que ces volets ne se meuvent qu'une seule fois, en début de vie du satellite lors du déploiement, alors que le volet obturateur doit pouvoir s'ouvrir et se fermer à plusieurs reprises durant toute la vie du satellite. On comprendra de ce fait que les contraintes de fonctionnement s'appliquant à ce volet obturateur sont bien plus sévères que celles s'appliquant à la paroi même du baffle d'entrée.

Il faut tout d'abord préciser que le fait que le volet obturateur soit manoeuvré à proximité d'un système optique exclue l'utilisation de lubrifiants, non seulement en raison du vide spatial environnant, mais aussi à cause des risques de pollution par ces lubrifiants des éventuelles surfaces froides du système optique (cas par exemple d'observations par infra-rouges qui suppose un refroidissement du système optique lui-même).

Les contraintes de fonctionnement s'appliquant au volet obturateur peuvent s'analyser comme suit :
- le fonctionnement doit admettre un mode nominal en ouverture/fermeture qui soit très fiable et le rester longtemps (plusieurs années sans possibilité d'intervention humaine directe) : donc le montage de ce volet dans le baffle d'entrée doit être très simple ;
- un mode dégradé d'ouverture (ou mode d'ouverture de secours) doit être prévu pour pouvoir assurer l ouverture du volet même en cas de défaillance du mode nominal de fonctionnement ; il convient en effet que, si le volet vient à cesser d'être manoeuvrable, il soit immobilisé en configuration ouverte (priorité à l'ouverture) ;
- ce mode dégradé doit être aussi fiable que possible, même après une longue période de stockage au sol et/ou dans le vide spatial (par exemple jusqu'à 10 ans), et ne doit pas présenter les mêmes risques de défaillance que le mode nominal (redondance) ;
- les éléments matériels intervenant dans les modes nominal et dégradé de fonctionnement doivent être préservés au mieux vis à vis des agressions mécaniques (accélérations et vibrations) lors du lancement, vis à vis des agressions thermiques et vis à vis des contraintes liées au vide spatial ;
- la masse totale doit être aussi faible que possible (contrainte habituelle dans le domaine spatial).

L'invention vise à satisfaire au moins les trois premières des contraintes précitées, c'est-à-dire a notamment pour objet un mécanisme d'obturation temporaire destiné à être fixé à l'entrée d'un système optique comportant un volet obturateur sans point de défaillance unique, dont la manoeuvre soit simple et fiable, aussi bien en mode nominal d'ouverture/fermeture que dans un mode dégradé indépendant du mode nominal, permettant de garantir qu'en cas de défaillance du mode nominal le volet obturateur vienne dans l'une prédéterminée de ses deux configurations d'ouverture ou de fermeture.

Il est à noter que l'invention suppose déjà satisfaites les contraintes concernant le gerbage et le déploiement du baffle lui-même lorsque celui-ci existe.

En fait une solution partielle au problème technique précité est donnée dans le document US-4.286.856 qui concerne la manoeuvre à distance de l'obturateur d'un instrument photographique, notamment pour effectuer des séquences de photos dans le domaine médical (il ne s'agit donc pas d'un volet obturateur au sens précisé ci-dessus). L'obturateur y est solidaire d'un arbre, commandé par des moyens électromagnétiques adaptés à le faire tourner dans un sens, tandis qu'un ressort est prévu pour le faire tourner dans l'autre sens. La solution apportée par ce document est partielle en ce sens qu'il n'y a pas de redondance obtenue par un mode dégradé de fonctionnement (dans un sens) qui soit indépendant du mode nominal : il y a un mode unique de fonctionnement et une éventuelle défaillance du ressort ou un blocage de l'axe au niveau du rotor/stator ou au niveau des paliers bloque définitivement le volet. En fait, aucune recherche de redondance ne se justifie vraiment dans le domaine technique considéré dans ce document.

On connaît par ailleurs, grâce au document FR-A-2.564.606, un organe de fermeture, notamment pour appareils de prises de vues aériennes, comprenant un volet mobile adapté à coulisser par ses bords dans des glissières en sorte d'obturer une ouverture, actionné par des moyens d'entraînement adaptés à le mouvoir vers la première d'au moins deux positions, des moyens d'inversion étant associés à ces moyens d'entraînement pour actionner le volet mobile vers la deuxième desdites deux positions au moins. Le volet y est relié à un arbre par deux bras coudés, et les moyens d'entraînement comprennent un moteur rotatif coopérant par des pignons avec cet arbre. Des moyens élastiques sont prévus pour assurer une ouverture de secours du volet en cas de défaillance du moteur. Là encore, il ne s'agit que d'une solution partielle au problème visé par l'invention puisqu'il n'y a pas, pas plus que dans le document précité, de mode dégradé de fonctionnement indépendant du mode nominal : un éventuel blocage de l'arbre bloque le volet jusqu'à ce qu'une réparation doit effectuée. Il s'agit là d'un niveau suffisant de redondance puisque, s'agissant d'une nacelle de reconnaissance aérienne, une réparation est possible après retour au sol. Ce document n'envisage par contre nullement un niveau plus élevé de redondance, ce que vise par contre l'invention.

Très généralement l'objet de l'invention peut se définir comme un appendice spatial articulé et motorisé, mobile autour d'un axe d'articulation au moins entre deux configurations, et dont on veut qu'il satisfasse aux conditions suivantes :
- il doit admettre un mode nominal de commande entre ces configurations qui soit fiable et le reste longtemps,
- il doit admettre un mode dégradé de commande en mouvement qui l'amène immanquablement dans l'une prédéterminée des configurations en cas de défaillance du mode nominal,
- ce mode dégradé ne doit pas présenter les mêmes risques de défaillance que le mode nominal (redondance), et doit présenter une fiabilité durable.

L'invention vise ainsi, outre le cas des volets obturateurs, notamment le cas de certaines pièces mobiles (réflecteurs) d'antennes.

L'invention propose à cet effet un dispositif articulé pour véhicule, comportant une pièce fixe de support destinée à être fixée à ce véhicule et un appendice mobile monté pivotant par rapport à la pièce fixe de support autour d'un axe d'articulation entre une première configuration et une seconde configuration, cet appendice étant lié à un arbre d'articulation commandé en rotation entre ces première et seconde configurations par un actionneur, un organe de rappel élastique étant assujetti à cet appendice en sollicitant élastiquement cet appendice en rotation autour de l'arbre dans un sens prédéterminé, caractérisé en ce que le véhicule est un véhicule spatial, l'appendice est fixé à l'arbre par un organe de liaison temporaire commandable, l'organe de rappel élastique est également assujetti à l'arbre et travaille en torsion, et cet arbre est engagé avec un jeu substantiel dans des paliers lisses solidaires de l'appendice.

Ce jeu permet d'éviter toute agression mécanique lors des sollicitations dues au lancement.

Dans le cas particulier préféré développe ci-dessus, où l'appendice considéré est un volet d'obturation, l'invention apporte une solution complète au problème précité en proposant un dispositif d'obturation temporaire destiné à être fixé à un orifice d'entrée d'un instrument optique spatial, comportant une pièce fixe de support destinée à être fixée à cet orifice et un volet d'obturation temporaire monté pivotant par rapport à la pièce fixe de support autour d'un axe d'articulation au moins entre une configuration de fermeture dans laquelle ce volet obture l'orifice d'entrée et une configuration d'ouverture dans laquelle ce volet laisse cet orifice d'entrée accessible à un rayonnement, ce volet étant fixé, par un organe frangible de liaison temporaire à rupture commandable, à un arbre d'articulation commandé en rotation au moins entre ses configurations de fermeture et d'ouverture par un actionneur, un organe de rappel élastique en torsion étant assujetti à ce volet et à cet arbre en sollicitant élastiquement ce volet en rotation autour de l'arbre dans un sens prédéterminé, cet arbre étant engagé avec un jeu substantiel dans des paliers lisses solidaires du volet.

On appréciera qu'une telle structure propose des éléments différents pour les diverses fonctions de motorisation en mode nominal et en mode dégradé, ce mode dégradé étant réalisé par des éléments n'ayant pas été précédemment sollicités mécaniquement, dans le mode nominal. Cela est dû en particulier à la possibilité de dissocier le volet obturateur vis à vis de son arbre. De la sorte, il n'y a pas de point de panne unique.

En fait, on a parfois besoin, sur un instrument d'optique spatial, d'avoir les deux fonctions suivantes :
- une fonction de calibration qui a pour but de réétalonner en orbite l'instrument par rapport à une source stable et connue en spectre et en intensité. L'utilisation du Soleil est toute indiquée et peut être mise en oeuvre grâce à l'interposition d'un diffuseur (verre dépoli) dans le champ de l'instrument. La lumière du Soleil, diffusée par réflexion, illumine alors les détecteurs situés au plan focal ;
- la fonction d'obturation précitée qui est requise :
   . pour permettre de mesurer le signal délivré par les détecteurs qui sont alors totalement non illuminés, il s'agit de la "calibration du courant d'obscurité",
   . dans le cas de perte d'attitude de la plateforme orbitale, pour éviter toute entrée solaire directe préjudiciable à la survie des détecteurs.

L'invention a également pour objet accessoire de minimiser l'encombrement et le nombre de pièces nécessaires à ces fonctions de calibration et d'obturation, tout en conférant à ces dernières un degré maximal de fiabilité.

A cet effet, selon une disposition préférée de l'invention, la pièce fixe de support est destinée à être fixée sur le véhicule auprès de l'orifice d'un instrument optique spatial, et l'appendice mobile est un volet d'obturation temporaire muni sur une face d'un diffuseur et est adapté, dans la première configuration, à orienter ce diffuseur à la fois vers cet orifice et vers un rayonnement incident venant de l'extérieur et, dans la seconde configuration, à laisser libre accès à cet orifice, avec une configuration intermédiaire dans laquelle ledit orifice est obturé.

De manière préférée, le volet est incliné, dans cette première configuration, d'environ 45° vers l'extérieur vis à vis de la configuration intermédiaire d'obturation et, dans cette seconde configuration, d'environ 90° vers l'intérieur.

Selon des dispositions préférées de l'invention, éventuellement combinées, présentées ci-dessous à propos de l'un ou l'autre des volets d'obturation temporaire mais généralisables à tout autre appendice articulé :
- cette pièce fixe de support est liée à une paroi paresoleil formant baffle d'entrée pour le système optique ;
- ce dispositif comporte des butées solidaires de la pièce fixe de support contre lesquelles le volet vient en appui en ses configurations extrêmes, par exemple respectivement d'ouverture et de fermeture ;
- ce dispositif comporte au moins une première butée contre laquelle le volet vient en appui, en configuration d'ouverture, et au moins une seconde butée contre laquelle, en l'autre configuration (par exemple de fermeture, le volet vient en appui par au moins une portion solidaire de l'arbre ;
- ce dispositif comporte des moyens de verrouillage du volet dans l'une au moins de ses configurations extrêmes ; il peut s'agir d'un couple de maintien issu du moteur ;
- ces moyens de verrouillage sont magnétiques ;
- ces moyens de verrouillage magnétiques comportent des aimants solidaires de la pièce fixe de support adaptés à coopérer avec des zones magnétiques du volet ;
- l'actionneur commandant l'arbre en rotation par rapport à la pièce fixe de support est un moteur-couple ;
- l'organe frangible de liaison temporaire à rupture commandable est une liaison à commande pyrotechnique ou encore magnétique ; il peut aussi s'agir d un couteau thermique ;
- l'organe frangible de liaison temporaire à rupture commandable est interposé entre le volet et une plaquette solidaire de l'arbre, affrontée au volet selon un plan passant au moins approximativement par l'axe d'articulation, l'organe de rappel élastique en torsion tendant à écarter angulairement la plaquette vis à vis du volet ;
- une couche de matériau anti-collage (il s'agit en fait d'une barrière de diffusion) est interposée entre la plaquette et le volet ;
- l'organe de support élastique en torsion est un ressort à spirale traversé par l'arbre d'articulation ;
- l'organe de rappel élastique en torsion sollicite le volet dans le sens allant vers la configuration d'ouverture.

L'invention concerne également l'application à un télescope spatial du dispositif d'obturation temporaire.

L'invention concerne un mécanisme d'obturation dont le volet d'obturation constitue en outre un diffuseur.

Des objets, caractéristiques et avantages de l'invention ressortent de la description qui suit, donnée à titre d'exemple non limitatif, en regard des dessins annexés sur lesquels :
- la figure 1 est un schéma de principe d'un baffle d'entrée de système optique, comportant un mécanisme d'obturation conforme à l'invention,
- la figure 2 est une vue en perspective, avec arrachement partiel, de ce mécanisme d'obturation,
- la figure 3 est une vue schématique en coupe transversale de ce mécanisme d'obturation en mode nominal de fonctionnement,
- la figure 4 est une vue schématique similaire en mode dégradé d'ouverture, dans le cas où l'arbre d'obturation est bloqué,
- la figure 5 est une vue similaire en mode dégradé dans le cas où l'arbre est non verrouillé, ou bloqué dans une configuration intermédiaire,
- la figure 6 est une vue partielle montrant une variante de réalisation de la zone d'articulation du volet d'obturation à un panneau de support,
- la figure 7 est une vue partielle en coupe transversale selon la ligne VII-VII de la figure 6, montrant la liaison temporaire entre l'arbre d'articulation et le volet,
- la figure 8 est une vue partielle, en coupe transversale selon la ligne VIII-VIII de la figure 6, montrant l'articulation redondante du volet à l'arbre,
- la figure 9 est une vue partielle, en coupe transversale selon la ligne IX-IX de la figure 6, montrant le volet d'obturation lui-même,
- la figure 10 est une vue partielle, en coupe transversale selon la ligne X-X de la figure 6, montrant le palier droit de maintien de l'arbre d'articulation,
- la figure 11 est une vue partielle similaire en coupe transversale selon la ligne X-XI de la figure 6, du palier gauche de maintien de l'arbre d'articulation, et
- la figure 12 est une vue de dessus, selon la flèche XII de la figure 11, du palier gauche de cette figure 11, qui est rotatif.
- la figure 13 est un schéma de principe en perspective d'un autre mode de réalisation, à savoir un mécanisme d'obturation et de calibration pour instrument optique spatial,
- la figure 14 est une vue schématique en coupe transversale de ce mécanisme, en configuration d'ouverture,
- la figure 15 en est une vue schématique analogue, en configuration de calibration,
- la figure 16 en est une vue schématique analogue, en configuration intermédiaire d'obturation,
- la figure 17 en est une vue schématique analogue, lors de la rupture commandée de la liaison arbre/volet, en configuration intermédiaire d'obturation,
- la figure 18 est une vue schématique ultérieure du dispositif de la figure 17, après venue en butée de l'arbre, et
- la figure 19 en est une vue schématique ultérieure, après venue en butée du volet.

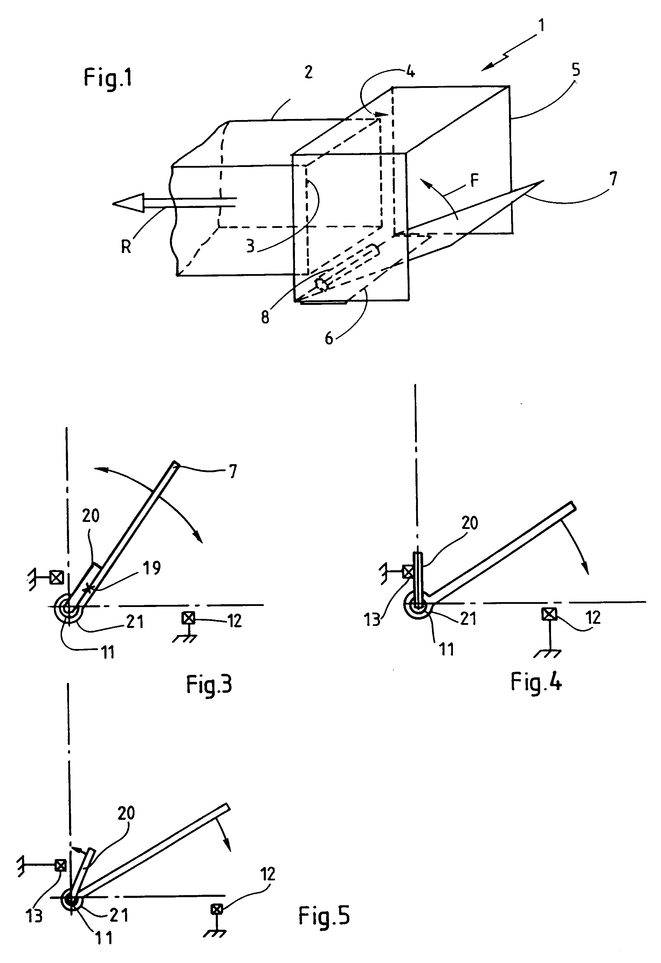

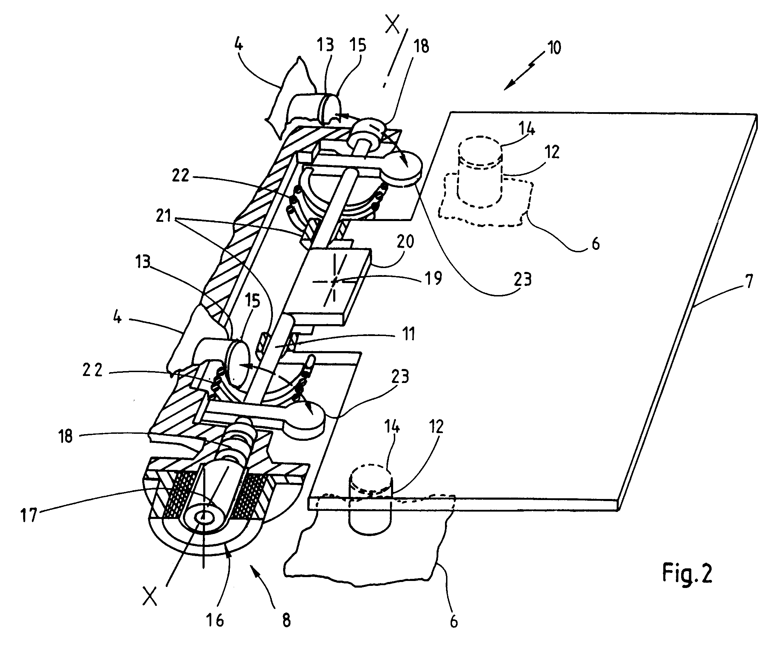

La figure 1 présente de façon schématique un exemple d'implantation d'un baffle d'entrée 1 équipé d'un mécanisme d'obturation conforme à l'invention, rapporté au corps 2 d'un instrument optique embarqué à bord d'un véhicule spatial (voire à bord d'un avion, bien que les exigences de fiabilité soient alors généralement moins critiques).

L'instrument ou système optique comporte une fenêtre d'entrée 3 à la faveur de laquelle pénêtre un rayonnement incident R.

Le baffle d'entrée 1 comporte ici un cadre de fond 4 reliant, à la fenêtre d'entrée 3, des volets pare-soleil 5 ici au nombre de trois. Un quatrième panneau 6, plus petit, lié au cadre 4 est en outre ici prévu pour une raison qui sera précisée plus loin. Ce panneau peut éventuellement se réduire à de simples protubérances du cadre 4.

Le baffle d'entrée 1 comporte en outre un volet obturateur 7, commandé en rotation par un mécanisme schématisé en 8 entre une configuration d'ouverture dans laquelle ce volet laisse la fenêtre 3 dégagée, en jouant lui-même le rôle d'un quatrième pare-soleil (la paroi 6, lorsqu'elle existe, peut alors servir au positionnement de ce volet) et une configuration de fermeture (sens de la flèche F) dans laquelle ce volet empêche toute pénétration de lumière dans l'instrument optique.

En fait, comme cela a été indiqué plus haut, les volets pare-soleil 5 (et 6 lorsqu'il existe) sont articulés au sein du baffle en sorte de pouvoir être gerbés sous la coiffe du lanceur puis déployés en configuration de service. Toutefois, cet aspect, ne faisant pas en soi partie de l'invention, ne sera pas détaillé ici, le montage de ces volets pare-soleil étant de tout type connu approprié.

La figure 2 présente un exemple de réalisation concrète du dispositif d'obturation 10 formé par les éléments 7 et 8 de la figure 1.

Ce dispositif comporte tout d'abord le volet d'obturation 7, lié à un arbre de rotation 11, et mobile en rotation autour de l'axe longitudinal X-X de cet arbre, entre la configuration ouverte (représentée) dans laquelle il est en contact avec des butées 12 solidaires du cadre 4, liées par exemple au volet 6, et la configuration fermée (non représentée) dans laquelle il vient en contact avec des butées 13 liées par exemple au cadre 4 du baffle 1. En pratique cette configuration fermée est la configuration de gerbage au lancement.

Ces butées 12 et 13 comportent avantageusement des aimants 14 et 15 assurant le maintien en position du volet (qui comporte dans ce cas des portions magnétiques - par exemple d'autres aimants - adaptées à venir en regard de ces aimants) ; en fait, une pièce en matériau non magnétique (non représentée) est avantageusement prévue entre ces aimants ou dans leur proche voisinage pour éviter que ceux-ci puissent être endommagés par des chocs (cette pièce empêche par exemple tout contact entre ces aimants).

L'arbre de rotation 11 est commandé en rotation par un actionneur 16, ici constitué par un moteur-couple dont le rotor 17 est monté directement sur cet arbre. Il s'agit par exemple d'un moteur de type 40 MCC de chez SAGEM.

L'arbre 11 est monté rotatif dans des paliers 18 à roulements (par exemple des roulements à contact angulaire) dont la piste externe est solidaire du baffle 1 lui-même.

Le volet 7 est fixé à l'arbre 11 par une liaison frangible temporaire à rupture commandable schématisée en 19, par exemple de type pyrotechnique, reliant une portion du volet 7 à une plaquette 20 solidaire de l'arbre 11. Ce volet comporte en outre des paliers lisses 21 dans lesquels l'arbre 11 passe avec un jeu important.

Ce jeu peut en pratique être de l'ordre du millimètre ; il dépend de l'amplitude du débattement transversal parasite de cet arbre dû aux vibrations au lancement, pour préserver autant que possible, même lors du lancement, l'absence de contact (donc d'agression mécanique réciproque) entre l'arbre 11 et les paliers 21.

Il est à noter que, comme ces paliers n'ont pas à résister à des agressions mécaniques, on peut choisir, comme matériau constitutif des paliers, des matériaux de relativement faible dureté mais ayant de bonnes caractéristiques de frottement (tels que matériaux auto-lubrifiés, le PTFE par exemple) ce qui évite d'avoir à mettre en oeuvre de quelconques lubrifiants additionnels susceptibles de conduire à des pollutions.

La plaquette 20 est affrontée au volet selon un plan parallèle au volet, passant au moins approximativement par l'axe X-X.

Au moins un élément de rappel élastique en torsion 22 est interposé entre l'arbre 11 et le volet 7, en sorte de tendre à faire tourner le volet autour de l'arbre dans un sens propre à appliquer le volet contre les butées 12 de maintien en configuration ouverte, la plaquette 20 étant par réaction sollicitée dans le sens de la fermeture. Bien entendu cette rotation relative entre arbre et volet ne peut se réaliser sous l'effet de cette énergie élastique de torsion qu'après rupture de la liaison temporaire 19.

Dans l'exemple de réalisation de cette figure 2, les zones 23 du volet adaptées à venir en appui contre les butées 13 de maintien en configuration fermée sont en fait solidaires de l'arbre, ici fermées par des doigts, grâce à quoi l'arbre 11 vient en une position de butée angulaire en cas de rupture de la liaison temporaire 19 : cela garantit, sous réserve que l'énergie en torsion stockée dans les éléments de rappel élastique soit suffisante, un bon verrouillage du volet en configuration ouverte.

Ces éléments de rappel élastique en torsion sont ici au nombre de deux, constitués de ressorts en spirale enroulés autour de l'arbre et fixés d'une part au volet, et à l'arbre, ici auxdits doigts 23.

Il y a ainsi une redondance mécanique assurée par la possibilité de découpler le volet 7 et l'arbre 11.

Une redondance électrique peut être assurée par le doublement du bobinage du moteur couple 16.

Le mécanisme assure les trois fonctions suivantes, à partir de la configuration fermée lors du lancement :
- ouverture en mode nominal (figure 3) :
L'action du moteur 16 mis sous tension d'alimentation suffit en pratique à déverrouiller le panneau 7 maintenu par les deux aimants permanents 13, ceux-ci étant choisis pour empêcher le panneau de tourner sous les accélérations orbitales.

Le moteur amène ensuite le panneau de la position fermée à la position ouverte. Seul le guidage principal est utilisé, l'arbre II et le panneau 7 restant solidaires.

Le mécanisme est ensuite verrouillé en position ouverte grâce aux aimants 12.
- fermeture en mode nominal :

Même principe que ci-dessus, l'arbre tournant en sens contraire.
- ouverture en mode dégradé :

En cas de non fonctionnement d'un élément utilisé en mode nominal, la liaison temporaire 19 est supprimée, ici par effet de cisaille pyrotechnique, (en variante non représentée il peut aussi s'agir notamment d'une ventouse électromagnétique ou d'un couteau thermique). Le mécanisme passe alors en mode dégradé.

On a supposé ci-dessus que le moteur était capable d'arracher le panneau par rapport aux aimants. En fait, lorsque les accélérations orbitales envisagées conduisent à choisir des aimants trop forts dont l'attraction serait difficile à surmonter par le moteur, on peut utiliser un dispositif de verrouillage plus sophistiqué, par exemple à électro-aimants, permettant de faire varier l'effort de retenue des butées sur le volet.

Plusieurs cas de défaillance peuvent se présenter :
- blocage en position fermée (collage auprès des aimants 13 ou grippage des paliers 18). Les ressorts 22 préalablement tarés entraînent le panneau en rotation autour de l'arbre qui reste immobile, retenu par le verrouillage (figure 4). Le guidage est assuré par les deux paliers redondants 21. Le panneau est ensuite verrouillé en position ouverte par les aimants 12. En cas de défaillance successive de ce dernier dispositif de maintien, le couple résiduel du ressort en fin de course suffit à maintenir le panneau ouvert,
- défaillance du moteur : mécanique (blocage rotor/stator), ou électrique (alimentation, coupure bobinage). Le mode d'action est le même que pour le cas précédent. Cependant, l'arbre n'est pas alors forcément immobilisé (figure 5) ; le ressort agit d'abord sur l'arbre qui a un moment d'inertie plus faible que le panneau. L'arbre est amené en butée sur les verrouillages en position fermée, et dans un deuxième temps le panneau peut tourner jusqu'à la position ouverte,
- défaillance du verrouillage en position ouverte : après arrêt du moteur, le panneau se trouve dans une position inconnue. Le mécanisme agit comme dans le 2ème cas exposé après désolidarisation de l'axe et du panneau.

Aucune fonction du mécanisme ne permet de refermer le panneau en cas de défaillance d'un quelconque élément, mais cela est cohérent avec le choix fait à l'origine de privilégier la fiabilisation de l'ouverture.

Il est à noter que les éléments utilisés en mode ouverture dégradé n'ont pas été sollicités mécaniquement précédemment, que ce soit pour le mode nominal ou lors du lancement : en fonctionnement nominal et surtout lors des sollicitations de lancement, il n'y a pas de contact entre l'arbre et les paliers redondants 21 ; le ressort reste en tension entre l'axe et le panneau, mais il n'est pas utilisé.

Lors du lancement, les efforts exercés sur le panneau et l'axe sont repris par le guidage nominal. Les paliers redondants ne sont donc pas sollicités par les charges de lancement, du fait du jeu dans le guidage.

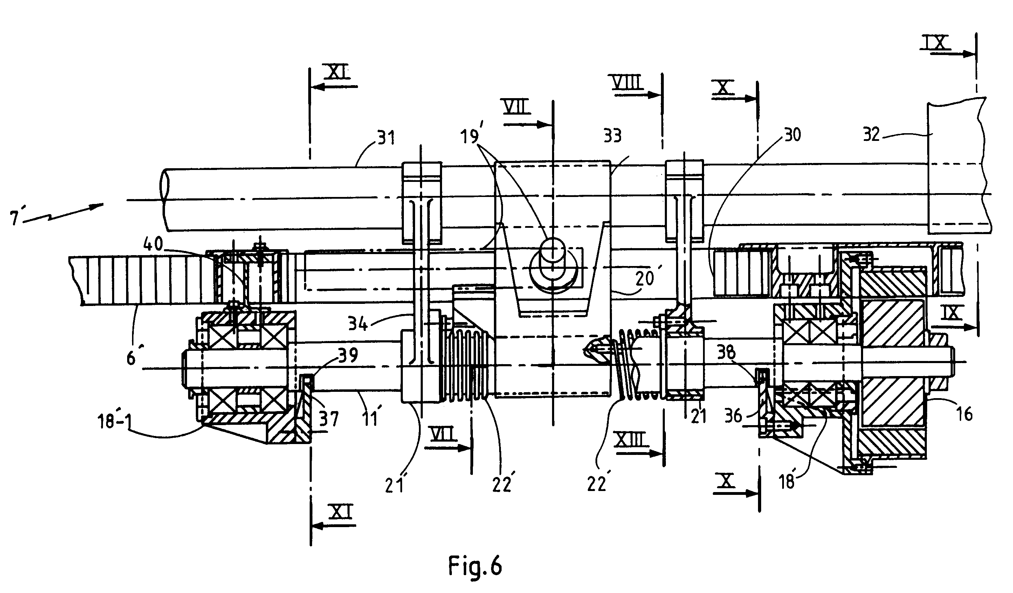

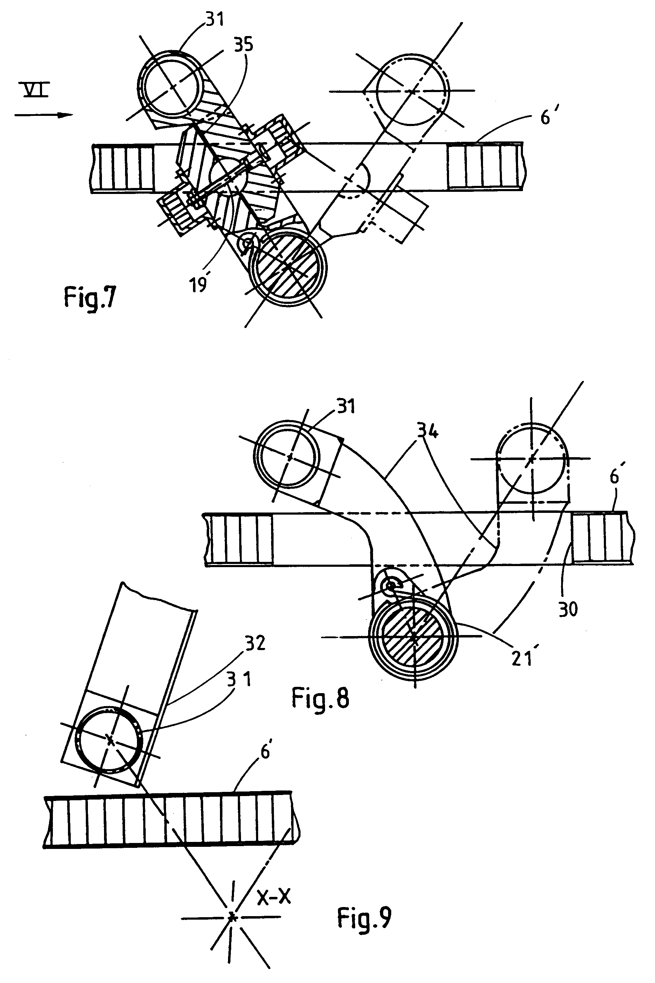

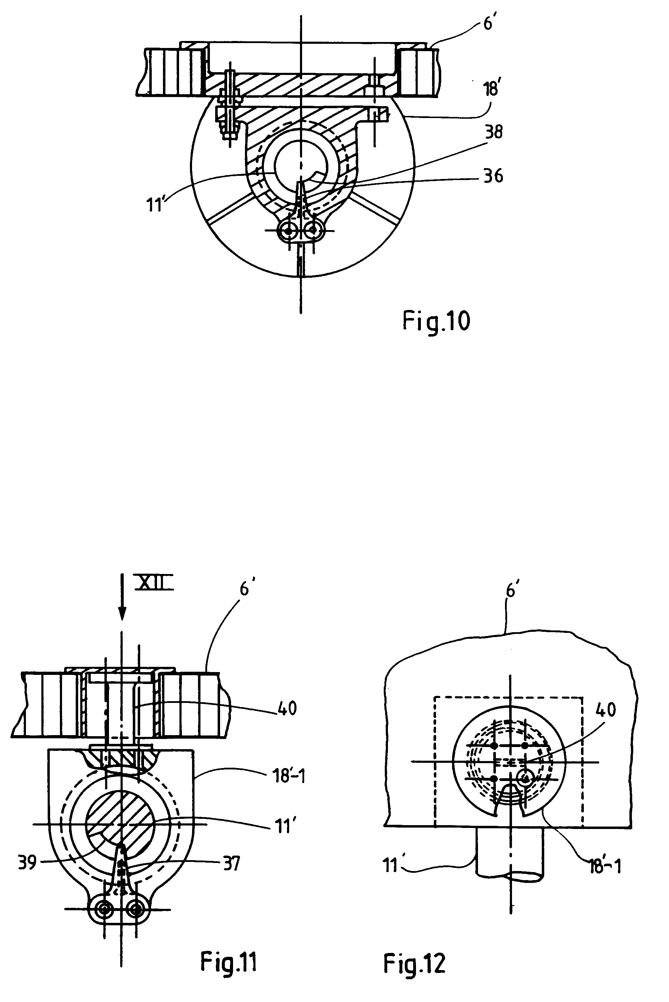

Les figures 6 à 12 décrivent plus en détail une autre forme de réalisation, dans lesquels des éléments similaires à ceux de la figure 2 ont le même numéro de référence, mais affecté de l'indice "prime".

L'arbre d'articulation 11' est ici disposé sous une paroi 6' du baffle d'entrée, le long d'une fente 30 prévue dans cette paroi (en pratique de structure en nid d'abeille).

Le volet 7' comporte ici une barre 31 reliée à des parties pleines telles que celle repérée 32 à la figure 6, parallèle à l'arbre 11' en lui étant reliée par une plaquette 33 temporairement assujettie à la plaquette 20' par une liaison temporaire 19' à commande pyrotechnique. De cette barre sont par ailleurs solidaires deux bras 34 comportant en leurs extrémités les paliers lisses 21'. Les ressorts de torsion 22' sont fixés respectivement à la plaquette centrale 20' et à ces bras 34.

Une couche intermédiaire 35 est avantageusement prévue entre les plaquettes 20' et 33 en un matériau propre à en éviter tout collage dans le vide spatial.

Le débattement angulaire de l'arbre est ici assuré par des goupilles radiales 36 et 37, solidaires de la paroi 6', et pénétrant dans des gorges 38 et 39 ménagées dans l'arbre 11' ; l'amplitude angulaire de ces gorges correspond au débattement angulaire du volet 7' (par exemple 70°), elle détermine le débattement angulaire de l'arbre lorsqu'il est dissocié du volet.

L'un 18'-I des paliers de l'arbre 11' est relié au panneau 6' par une lame flexible 40, transversale à l'arbre 11', ce qui contribue à réduire les risques de grippage, dûs par exemple à des variations de température.

Des exemples d'exigences fonctionnelles et opérationnelles que l'invention contribue à satisfaire dans le cas d'un télescope, sont donnés ci-dessous.

Lors de la phase de lancement, le baffle doit obturer le télescope afin d'éviter les entrées solaires pendant la phase de mise en configuration opérationnelle.

En phase opérationnelle il doit :
- limiter les entrées solaires à l'intérieur du télescope et réduire les lumières parasites,
- obturer le télescope en cas de perte momentanée de l'attitude ou d'un passage en mode survie du satellite afin d'éviter les entrées de flux solaire dans le télescope lors de ses mouvements.

La géométrie du baffle en configuration opérationnelle étant incompatible avec les contraintes d'implantation sous coiffe, le baffle doit être constitué d'éléments gerbés au lancement et déployés en orbite.

Un premier déploiement, par commande pyrotechnique du verrouillage de gerbage se fait en pratique entre 0 et 3 jours après la mise à poste du satellite.

La durée de vie en orbite du satellite peut être supérieure à cinq ans.

Le nombre de manoeuvres de l'obturateur en orbite doit pouvoir être de plusieurs dizaines (jusqu'à 200 par exemple).

Lorsque les rayons solaires atteignent une incidence minimale autorisée (par exemple 30°) par rapport a l'axe de visée Z, l'ordre de fermeture de l'obturateur est communiqué et l'alimentation du moteur 16 de commande en obturation intervient immédiatement, même après immobilisation de plusieurs années.

Les ordres d'obturation et d'ouverture du baffle pourront intervenir à n'importe quel moment sur l'orbite.

En mode survie du satellite (qui peut durer entre 1 jour et 10 jours), le satellite décrit une trajectoire héliocentrique ; l'axe d'entrée de l'instrument optique est pointé vers le soleil dans un cône de demi-angle au sommet 15°.

On appréciera qu'un dispositif tel que celui de la figure 2 satisfait simultanément les conditions suivantes :
- pas de point de défaillance unique,
- le mode redondant est réalisé par des éléments n'ayant pas été sollicités mécaniquement auparavant (lancement),
- conception réalisée avec un composant par fonction,
- le fonctionnement doit se faire sans apport d'énergie important (motorisation la plus faible possible),
- le panneau mobile doit pouvoir être verrouillé dans les deux positions ouvert/fermé.

De nombreuses variantes peuvent être proposées par l'homme de l'art sans sortir du cadre de l'invention. Ainsi par exemple le volet obturateur peut être utilisé en l'absence de tout pare-soleil 5 ou 6 ; il peut par ailleurs être monté sur le bord libre du baffle d'entrée et non pas nécessairement à l'intérieur comme représenté ci-dessus.

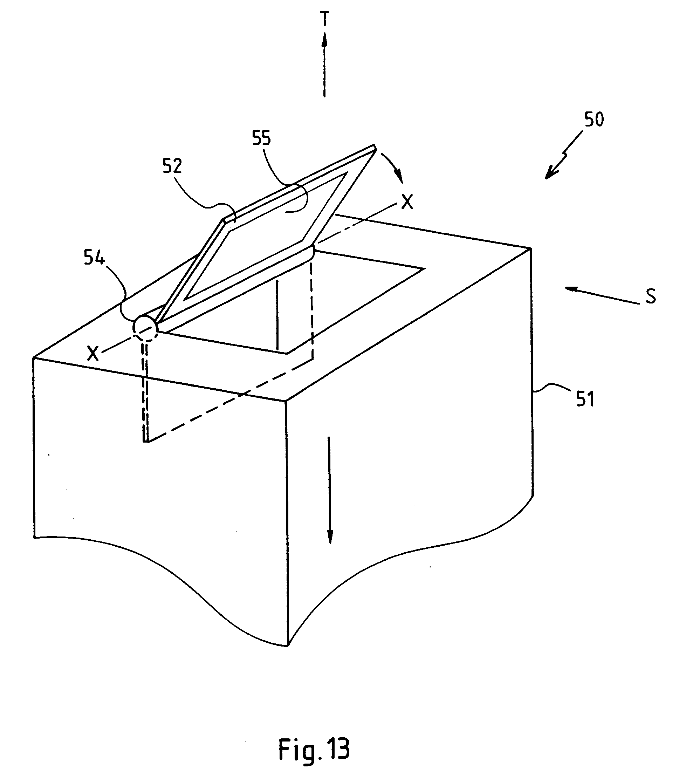

Le dispositif des figures 13 à 19 est une variante de celui des figures précédentes, et présente la même structure générale.

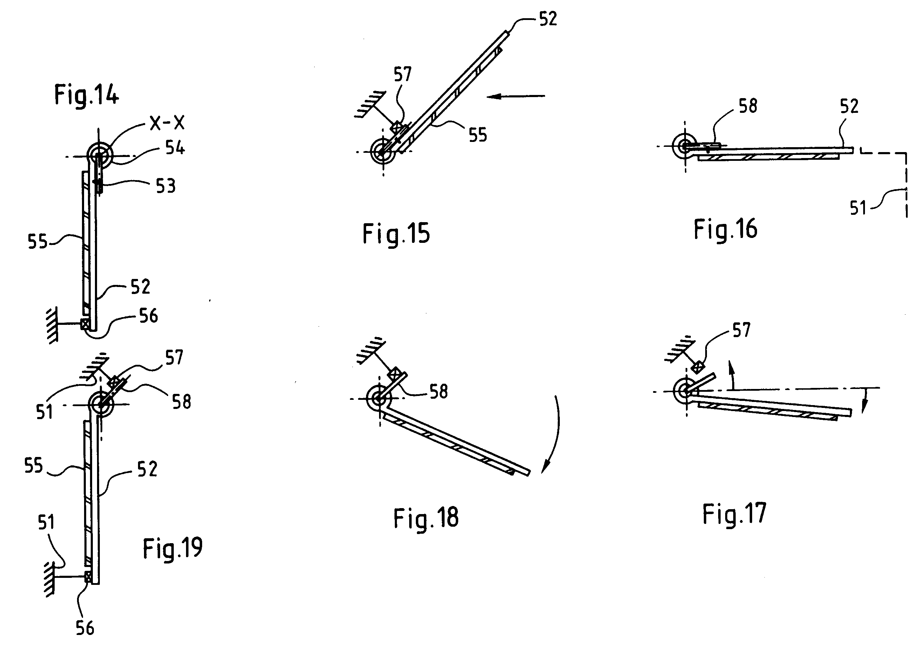

Ainsi le dispositif articulé pour véhicule spatial repéré 50 dans son ensemble, comporte une pièce fixe de support 51 destinée à être fixée à ce véhicule et un appendice mobile 52 monté pivotant par rapport à la pièce fixe de support autour d'un axe d'articulation X-X entre une première configuration (représentée aux figures 13 et 15) et une seconde configuration (représentée en tiretés à la figure 13 et à la figure 14), cet appendice étant fixé, par un organe frangible de liaison temporaire à rupture commandable 53, à un arbre d'articulation 54 commandé en rotation entre ces première et seconde configurations par un actionneur (de préférence un moteur couple), un organe de rappel élastique en torsion étant assujetti à cet appendice et à cet arbre en sollicitant élastiquement cet appendice en rotation autour de l'arbre dans un sens prédéterminé, cet arbre étant engagé avec un jeu substantiel dans des paliers lisses solidaires de l'appendice.

Des butées 56 et 57 solidaires de la pièce fixe 51 délimitent le débattement angulaire du volet. Le volet vient en appui contre les butées 56 en configuration d'ouverture tandis que, en configuration de calibration il vient en appui contre les butées 57 (ou au moins en regard de celles-ci : cela dépend de la position précise choisie pour la calibration) par une portion 58 solidaire de l'arbre.

Selon une disposition originale en soi de l'invention, le même organe mobile fait ainsi office d'obturateur et de diffuseur (grâce à un panneau diffuseur 55, en tout matériau approprié, en pratique en verre dépoli, dont le volet est muni sur sa face interne) et est adapté à prendre au moins trois positions :
- une position d'ouverture à 90° vers l'intérieur (Figure 14) qui libère le champ de l'instrument, qui peut donc observer la scène vers laquelle il se trouve pointé,
- une position d'obturation (Figure 16) dans laquelle le volet remplit complètement l'ouverture du baffle d'entrée de l'instrument, aucune lumière ne pénètre à l'intérieur,
- une position de calibration à 45° vers l'extérieur (Figure 15) dans laquelle le volet place le diffuseur, incliné, en vue de l'éclairement solaire. Notons que la valeur de cet angle est fixée précisément en fonction des paramètres de l'orbite considérée, de la saison et de la position exacte de l'instrument sur l'orbite au moment prévu pour effectuer cette opération de calibration. La position angulaire commandée par le calculateur de bord est donc susceptible :
- de valoir un angle quelconque, positif, typiquement 45°,
- de fluctuer au cours de l'année, autour de sa position moyenne.

Ce mécanisme, très similaire à celui du brevet principal, a les particularités suivantes :
- domaine angulaire plus important a priori, typiquement 135°,
- possibilité de positions intermédiaires où le volet est maintenu angulairement par le couple de maintien du moteur (voire éventuellement par un coupleur magnétique ou tout autre type de frein monté sur l'axe d'articulation),
- la position d'obturation n'est qu'une des positions intermédiaires possibles, et non pas une position extrême,
- l'ouverture du champ de l'instrument s'effectue par rotation du volet vers l'intérieur du baffle d'entrée, ceci afin de limiter le vieillissement du diffuseur en le protégeant des incidences solaires,
- la position "volet sorti" pour la calibration est déterminée soit par une butée de déploiement, soit par la consigne angulaire du moteur. Dans ce dernier cas, une butée de fin de débattement est tout de même prévue placée non loin de cette position, dans le but d'assurer au volet l'application du couple nécessaire à son rabattement si le dispositif frangible à rupture commandable devait être activé.

Il va de soi que la description qui précède n'a été proposée qu'à titre d'exemple non limitatif et que de nombreuses variantes peuvent être proposées par l'homme de l'art sans sortir du cadre de l'invention.

## Revendications

1. Dispositif articulé pour véhicule (10, 10'), comportant une pièce fixe de support (4, 6, 6', 51) destinée à être fixée à ce véhicule et un appendice mobile (7, 7', 52) monté pivotant par rapport à la pièce fixe de support autour d un axe d'articulation (X-X) entre une première configuration et une seconde configuration, cet appendice étant lié à un arbre d'articulation (11, 11', 54) commandé en rotation entre ces première et seconde configurations par un actionneur (16, 16'), un organe de rappel élastique (22, 22') étant assujetti à cet appendice en sollicitant élastiquement cet appendice en rotation autour de l'arbre dans un sens prédéterminé, caractérisé en ce que le véhicule est un véhicule spatial, l'appendice est fixé à l'arbre par un organe de liaison temporaire commandable (19, 53), l'organe de rappel élastique est également assujetti à l'arbre et travaille en torsion, et cet arbre est engagé avec un jeu substantiel dans des paliers lisses (21, 21') solidaires de l'appendice.

2. Dispositif selon la revendication 1, caractérisé en ce que la pièce fixe de support est destinée à être fixée sur le véhicule auprès de l'orifice d'un instrument optique spatial, et l'appendice mobile est un volet d'obturation temporaire adapté, dans la première configuration, à obturer cet orifice et, dans la seconde configuration, à laisser libre accès à cet orifice.

3. Dispositif selon la revendication 1, caractérisé en ce que la pièce fixe de support est destinée à être fixée sur le véhicule auprès de l'orifice d'un instrument optique spatial, et l'appendice mobile est un volet d'obturation temporaire muni sur une face d'un diffuseur (55) et est adapté, dans la première configuration, à orienter ce diffuseur à la fois vers cet orifice et vers un rayonnement incident venant de l'extérieur et, dans la seconde configuration, à laisser libre accès à cet orifice, avec une configuration intermédiaire dans laquelle ledit orifice est obturé.

4. Dispositif selon la revendication 3, caractérisé en ce que le volet est incliné, dans cette première configuration, d'environ 45° vers l'extérieur vis à vis de la configuration intermédiaire d'obturation et, dans cette seconde configuration, d'environ 90° vers l'intérieur.

5. Dispositif selon l'une quelconque des revendications 2 à 4, caractérisé en ce que cette pièce fixe de support est liée à une paroi pare-soleil (5) formant baffle d'entrée pour le système optique.

6. Dispositif selon l'une quelconque des revendications 1 à 4, caractérisé en ce qu'il comporte des butées (12, 13, 36, 37, 56, 57) solidaires de la pièce fixe de support contre lesquelles l'appendice vient en appui en ses première et seconde configurations.

7. Dispositif selon la revendication 6, caractérisé en ce qu'il comporte au moins une première butée (12, 56) contre laquelle l'appendice vient en appui, dans la première configuration, et au moins une seconde butée (13, 57) contre laquelle, dans la seconde configuration, l'appendice vient en appui par au moins une portion (23) solidaire de l'arbre.

8. Dispositif selon l'une quelconque des revendications 1 à 7, caractérisé en ce qu'il comporte des moyens de verrouillage (14, 15) de l'appendice dans l'une au moins de ses configurations.

9. Dispositif selon la revendication 8, caractérisé en ce que ces moyens de verrouillage sont magnétiques.

10. Dispositif selon la revendication 9, caractérisé en ce que ces moyens de verrouillage magnétiques comportent des aimants (14, 15) solidaires de la pièce fixe de support (4, 6) adaptés à coopérer avec des zones magnétiques de l'appendice.

11. Dispositif selon l'une quelconque des revendications 1 à 10, caractérisé en ce que l'actionneur (16, 16') commandant l'arbre en rotation par rapport à la pièce fixe de support est un moteur-couple.

12. Dispositif selon l'une quelconque des revendications 1 à 11, caractérisé en ce que l'organe frangible de liaison temporaire à rupture commandable (19, 53) est une liaison à commande pyrotechnique.

13. Dispositif selon l'une quelconque des revendications 1 à 12, caractérisé en ce que l'organe frangible de liaison temporaire à rupture commandable est interposé entre l'appendice et une plaquette (20, 20', 58) solidaire de l'arbre, affrontée à l'appendice selon un plan passant au moins approximativement par l'axe d'articulation, l'organe de rappel élastique en torsion tendant à écarter angulairement la plaquette vis à vis de l'appendice.

14. Dispositif selon la revendication 13, caractérisé en ce qu'une couche (35) de matériau anti-collage est interposée entre la plaquette et l'appendice.

15. Dispositif selon l'une quelconque des revendications 1 à 14, caractérisé en ce que l'organe de support élastique en torsion est un ressort à spirale (22, 22') traversé par l'arbre d'articulation.

16. Dispositif selon l'une quelconque des revendications 1 à 15, caractérisé en ce que, l'appendice étant un volet d'obturation temporaire dont la seconde configuration est une configuration d'ouverture, l'organe de rappel élastique en torsion sollicite le volet dans le sens allant vers la configuration d'ouverture.

17. Télescope spatial comportant un dispositif articulé selon l'une quelconque des revendications 1 à 16.

## Claims

1. Articulated device for a vehicle (10, 10') comprising a fixed support element (4, 6, 6', 51) for mounting on the vehicle and a mobile auxiliary element (7, 7', 52) mounted to pivot relative to the fixed support element about a hinge-axis (X-X) between a first configuration and a second configuration, the auxiliary element being connected to a hinge shaft (11, 11', 54) rotated between the first and second configurations by an actuator (16, 16'), a resilient return device (22, 22') being secured to said auxiliary element and resiliently biassing the auxiliary element to rotate it about the shaft in a predetermined direction, characterized in that the vehicle is a space vehicle, the auxiliary element is attached to the shaft by a controlled temporary connection component (19, 53), the resilient return device is also secured to the shaft and works in torsion, and the shaft is engaged with substantial clearance in journal bearings (21, 21') which are rigidly fastened to the auxiliary element.

2. Device according to claim 1 characterized in that the fixed support element is adapted to be mounted on the vehicle near the aperture of a space optical instrument and the mobile auxiliary element is a temporary sealing flap adapted in the first configuration to close the aperture and in the second configuration to provide free access to the aperture.

3. Device, according to claim 1, characterized in that the fixed support element is adapted to be fixed to the vehicle near the aperture of a space optical instrument and the mobile auxiliary element is a temporary sealing flap provided on one side with a diffuser (55) and is adapted in the first configuration to orient the diffuser towards the aperture and towards incident radiation from the exterior and in the second configuration to provide free access to the aperture with an intermediate configuration in which said aperture is closed.

4. Device according to claim 3 characterized in that the flap is inclined in the first configuration approximately 45° outwardly relative to the sealing intermediate configuration and in the second configuration approximately 90° inwardly.

5. Device according to any one of claims 2 to 4 characterized in that the fixed support element is joined to a sunshade wall (5) forming an aperture baffle for the optical system.

6. Device according to any one of claims 1 to 4 characterized in that it comprises abutments (12, 13, 36, 37, 56, 57) rigidly fastened to the support element against which the auxiliary element bears in its first and second configurations.

7. Device according to claim 6 characterized in that it comprises at least one first abutment (12, 56) against which the auxiliary element bears in the first configuration and at least one second abutment (13, 57) against which the auxiliary element bears through at least one portion (23) rigidly fastened onto the shaft in the second configuration.

8. Device according to any one of claims 1 to 7 characterized in that it comprises means (14, 15) for locking the auxiliary element in at least one of its configurations.

9. Device according to claim 8 characterized in that the locking means are magnetic.

10. Device according to claim 9 characterized in that the magnetic locking means comprises magnets (14, 15) rigidly fastened onto the fixed support element (4, 6) adapted to cooperate with magnetic areas of the auxiliary element.

11. Device according to any one of claims 1 to 10 characterized in that the actuator (16, 16') rotating the shaft relative to the fixed support element is a torque motor.

12. Device according to any one of claims 1 to 11 characterized in that the frangible controlled-break temporary connection component (19, 53) is a pyrotechnic device.

13. Device according to any one of claims 1 to 12 characterized in that the frangible controlled-break temporary connection component is disposed between the auxiliary element and a plate (20, 20', 58) rigidly fastened onto the shaft in face-to-face relationship with the auxiliary element in a plane passing at least approximately through the hinge axis, the torsional resilient return device tending to move the plate away from the auxiliary element.

14. Device according to claim 13 characterized in that a layer (35) of non-stick material is disposed between the plate and the auxiliary element.

15. Device according to any one of claims 1 to 14 characterized in that the torsional resilient support device is a coil spring (22, 22') through which the hinge shaft passes.

16. Device according to any one of claims 1 to 15 characterized in that the auxiliary element is a temporary sealing flap whose second configuration is an open configuration and the torsional resilient return means bias the flap in the direction towards the open configuration.

17. Space telescope comprising an articulated device according to any one of claims 1 to 16.

## Patentansprüche

1. Schwenkvorrichtung für ein Fahrzeug (10, 10') mit einem zur Befestigung an diesem Fahrzeug vorgesehenen, feststehenden Stützglied (4, 6, 6', 51) und einem beweglichen Ansatz (7, 7', 52), der gegenüber dem feststehenden Stützglied um eine Schwenkachse (X-X) zwischen einer ersten und einer zweiten Stellung verschwenkbar und mit einer Drehwelle (11, 11', 54) verbunden ist, die zwischen dieser ersten und dieser zweiten Stellung durch ein Betätigungsglied (16, 16') verdrehbar ist, wobei ein elastisches Rückstellorgan (22, 22') an diesem Ansatz befestigt ist und ihn in Drehrichtung um die Welle in eine vorbestimmte Richtung hin vorspannt, **dadurch gekennzeichnet,** daß das Fahrzeug ein Raumfahrzeug ist, der Ansatz durch ein temporär-wirksames, steuerbares Verbindungsorgan (19, 53) an der Welle befestigt ist, das elastische Rückstellglied ebenfalls an der Welle befestigt ist und in Drehrichtung arbeitet, und daß diese Welle mit einem beträchtlichen Spiel in am Ansatz angebrachten Gleitlagern (21, 21') läuft.

2. Vorrichtung nach Anspruch 1, dadurch gekennzeichnet, daß das feststehende Stützglied zur Befestigung an dem Fahrzeug nahe der Öffnung eines raumoptischen Gerätes vorgesehen und der bewegliche Ansatz eine temporär-wirksame Verschlußklappe ist, die dazu dient, in der ersten Stellung diese Öffnung abzudecken und in der zweiten Stellung den Zugang zu dieser Öffnung frei zu lassen.

3. Vorrichtung nach Anspruch 1, dadurch gekennzeichnet, daß das feststehende Stützglied zur Befestigung an dem Fahrzeug nahe der Öffnung eines raumoptischen Gerätes vorgesehen und der bewegliche Ansatz eine temporär-wirksame Verschlußklappe ist, die auf einer Seite mit einem Diffusor (55) ausgestattet ist und dazu dient, in der ersten Stellung diesen Diffusor zugleich in Richtung auf die Öffnung sowie auf eine von außen kommende Eingangsstrahlung auszurichten und in der zweiten Stellung den Zugang zu dieser Öffnung frei zu lassen, wobei eine Zwischenstellung vorgesehen ist, in der die Öffnung abgedeckt wird.

4. Vorrichtung nach Anspruch 3, dadurch gekennzeichnet, daß die Klappe in der ersten Stellung gegenüber der abdeckenden Zwischenstellung um etwa 45° nach außen und in der zweiten Stellung um etwa 90° nach innen geneigt ist.

5. Vorrichtung nach einem der Ansprüche 2 bis 4, dadurch gekennzeichnet, daß das feststehende Stützglied mit einem Sonnenschutzschirm (5) verbunden ist, der eine Eingangsabschirmung für die optische Anlage ausbildet.

6. Vorrichtung nach einem der Ansprüche 1 bis 4, dadurch gekennzeichnet, daß sie am feststehenden Stützglied befestigte Anschläge (12, 13, 36, 37, 56, 57) aufweist, gegen die der Ansatz in seiner ersten und seiner zweiten Stellung zur Anlage kommt.

7. Vorrichtung nach Anspruch 6, dadurch gekennzeichnet, daß sie mindestens einen ersten Anschlag (12, 56), gegen den der Ansatz in seiner ersten Stellung zur Anlage kommt, und mindestens einen zweiten Anschlag (13, 57) aufweist, gegen den der Ansatz in seiner zweiten Stellung mit zumindest einem an der Welle befestigten Abschnitt (23) zur Anlage kommt.

8. Vorrichtung nach einem der Ansprüche 1 bis 7, dadurch gekennzeichnet, daß sie Mittel (14, 15) zum Feststellen des Ansatzes in mindestens einer seiner Stellungen umfaßt.

9. Vorrichtung nach Anspruch 8, dadurch gekennzeichnet, daß diese Mittel zum Feststellen magnetisch sind.

10. Vorrichtung nach Anspruch 9, dadurch gekennzeichnet, daß diese magnetischen Feststellmittel Magneten (14, 15), die am feststehenden Stützglied (4, 6) befestigt sind, umfassen, die dazu dienen, mit magnetischen Bereichen des Ansatzes zusammenzuwirken.

11. Vorrichtung nach einem der Ansprüche 1 bis 10, dadurch gekennzeichnet, daß das Betätigungsglied (16, 16'), das die Drehung der Welle gegenüber dem feststehenden Stützglied steuert, ein Stellmotor ist.

12. Vorrichtung nach einem der Ansprüche 1 bis 11, dadurch gekennzeichnet, daß das temporär-wirksame, lösbare Verbindungsorgan mit steuerbarer Lösbarkeit (19, 53) eine pyrotechnisch gesteuerte Verbindung ist.

13. Vorrichtung nach einem der Ansprüche 1 bis 12, dadurch gekennzeichnet, daß das temporär-wirksame, lösbare Verbindungsorgan mit steuerbarer Lösbarkeit zwischen dem Ansatz und einer an der Welle befestigten Platte (20, 20', 58) angeordnet und entsprechend einer Ebene, die zumindest näherungsweise durch die Schwenkachse verläuft, an den Ansatz angefügt ist, wobei das elastische Dreh-Rückstellglied dahingehend wirkt, daß es die Platte vom Ansatz winkelig abspreizt.

14. Vorrichtung nach Anspruch 13, dadurch gekennzeichnet, daß eine Auflage (35) aus Antihaftmaterial zwischen die Platte und den Ansatz zwischengeschaltet ist.

15. Vorrichtung nach einem der Ansprüche 1 bis 14, dadurch gekennzeichnet, daß das elastische Dreh-Stützorgan eine Spiralfeder ist, durch welche die Schwenkachse hindurchläuft.

16. Vorrichtung nach einem der Ansprüche 1 bis 15, dadurch gekennzeichnet, daß der Ansatz eine temporär-wirksame Verschlußklappe ist, deren zweite Stellung eine geöffnete Stellung ist, wobei das elastische Dreh-Rückstellglied die Klappe in Richtung auf die geöffnete Stellung drückt.

17. Raumteleskop mit einer Schwenkvorrichtung nach einem der Ansprüche 1 bis 16.
